# EUROPEAN PATENT APPLICATION

(11) **EP 4 582 460 A1**
(43) Date of publication of application: **09.07.2025**
(21) Application number: 23860372.4
(22) Date of filing: 29.08.2023
(51) Int. Cl.: C08B 15/06

(54) **HYDROPHOBICALLY MODIFIED CELLULOSE FIBERS AND METHOD FOR PRODUCING SAME**

(30) Priority: 31.08.2022 JP 2022138431
(71) Applicant: Kureha Corporation, Chuo-ku Tokyo 103-8552 (JP); Resinous Kasei Co., Ltd., Tokyo 103-0012 (JP); Kureha Trading Co., Ltd., Tokyo 103-0012 (JP)
(72) Inventor: KUDO, Takahiro, Tokyo 103-8552 (JP); SATO, Takeshi, Tokyo 103-8552 (JP); ARAI, Keizo, Tokyo 103-0012 (JP); ITO, Masaki, Tokyo 103-0012 (JP)
(74) Representative: Zimmermann & Partner Patentanwälte mbB
(86) International application number: PCT/JP2023/031326
(87) International publication number: WO 2024/048610

(57) **Abstract**

To provide a method for producing hydrophobically modified cellulose fibers efficiently with a small amount of a hydrophobic modifier. The method for producing the cellulose fibers that solves the problem described above includes preparing an aqueous solution having a cellulose fiber concentration of 0.5 mass% or more and 50 mass% or less and a base concentration of 1 mass% or more and 10 mass% or less by mixing cellulose fibers, a base, and water; reacting the cellulose fibers and a cyclic amide compound by adding, to the aqueous solution, the cyclic amide compound in an amount of 0.2 equivalents or more and 10 equivalents or less relative to an amount of anhydroglucose units contained in the cellulose fibers; and neutralizing the base by further adding an acid to the aqueous solution.

## Description

### TECHNICAL FIELD

The present invention relates to hydrophobically modified cellulose fibers and a method for producing the fibers.

### BACKGROUND ART

In recent years, studies have been conducted on a reduction in global greenhouse gas emissions by compounding biomass-derived materials and replacing various known composite materials with the biomass-derived composite materials. Cellulose fibers are known as one of biomass-derived materials. Cellulose fibers have high hydrophilicity due to OH groups of glucose units contained in the molecular structure of cellulose. However, cellulose fibers having high hydrophilicity have problems that they have low compatibility with an organic solvent or a resin and difficult to use as is in a composite material.

Thus, hydrophobic modification of cellulose fibers has been attempted by various methods. In particular, there is a widely known method in which cellulose fibers are reacted with acetic anhydride for hydrophobic modification of the fibers (e.g., Patent Document 1).

### CITATION LIST

### PATENT DOCUMENT

Patent Document 1: JP 2020-75950 A

### SUMMARY OF INVENTION

### TECHNICAL PROBLEM

However, the method described in Patent Document 1 requires a large amount of acetic anhydride at the time of hydrophobic modification of cellulose fibers. The reasons for this are as follows. Cellulose fibers have a property of aggregating when being dehydrated. Thus, the hydrophobic modification is performed by dispersing cellulose fibers in water. However, when acetic anhydride is added to an aqueous solution of the cellulose fibers, acetic anhydride and water irreversibly react to form acetic acid. That is, acetic anhydride is consumed by water before the reaction between the acetic anhydride and the cellulose fibers, and thus the hydrophobic modification of the cellulose fibers does not adequately proceed. Thus, a large amount of acetic anhydride is required to be added at the time of the hydrophobic modification, because acetic anhydride is reacted with all water present in the system and also used for hydrophobic modification of the cellulose fibers.

The present invention has been completed in light of the circumstances described above, and an object of the present invention is to provide a method for producing hydrophobically modified cellulose fibers efficiently with a small amount of a hydrophobic modifier and hydrophobically modified cellulose fibers produced by the method.

### SOLUTION TO PROBLEM

The present invention provides a method for producing hydrophobically modified cellulose fibers, the method including preparing an aqueous solution having a cellulose fiber concentration of 0.5 mass% or more and 50 mass% or less by mixing cellulose fibers, a base, and water; reacting the cellulose fibers and a cyclic amide compound by adding, to the aqueous solution, the cyclic amide compound in an amount of 0.2 equivalents or more and 10 equivalents or less relative to an amount of anhydroglucose units contained in the cellulose fibers; and neutralizing the base by further adding an acid to the aqueous solution.

The present invention also provides hydrophobically modified cellulose fibers having a structure in which a cyclic amide compound is ring-opening-polymerized with an OH group of cellulose constituting the cellulose fibers.

### ADVANTAGEOUS EFFECTS OF INVENTION

According to the method for producing hydrophobically modified cellulose fibers of the present invention, hydrophobically modified cellulose fibers can be produced efficiently with a small amount of a hydrophobic modifier. The hydrophobically modified cellulose fibers produced by the production method have high compatibility to a resin or an organic solvent and can be used in various composite materials.

### BRIEF DESCRIPTION OF THE DRAWINGS

FIG. 1 shows photographs illustrating the states of compositions in which hydrophobically modified cellulose fibers produced in Examples 1, 3, 4, and 8 are dispersed in an epoxy resin.
FIG. 2 shows photographs illustrating the states of compositions in which (hydrophobically) modified cellulose fibers produced in Example 11, Comparative Example 1, Comparative Example 3, and Comparative Example 7 are dispersed in an epoxy resin.
FIG. 3 shows photographs illustrating the states of compositions in which hydrophobically modified cellulose fibers produced in Example 12 and Example 13 are dispersed in an epoxy resin.

### DESCRIPTION OF EMBODIMENTS

### 1. Method for Producing Hydrophobically Modified Cellulose Fibers

An embodiment of the present invention relates to a method for producing hydrophobically modified cellulose fibers having enhanced compatibility to various resins or organic solvents by hydrophobically modifying cellulose fibers.

As described above, in a case where acetic anhydride is used as a hydrophobic modifier, a large amount of acetic anhydride is required, and there are problems in cost, production efficiency, and the like. In contrast, in the production method according to an embodiment of the present invention, a cyclic amide compound is used as a hydrophobic modifier. Although the cyclic amide compound reacts with water in the system, the reaction is reversible. Thus, at the time of hydrophobic modification of cellulose fibers, the hydrophobic modifier (cyclic amide compound) is not consumed by the reaction with water, and the cellulose fibers can be efficiently treated with a small amount of the hydrophobic modifier.

Specifically, the method for producing hydrophobically modified cellulose fibers according to an embodiment of the present invention includes a step of preparing an aqueous solution having a cellulose fiber concentration of 0.5 mass% or more and 50 mass% or less by mixing cellulose fibers, a base, and water (hereinafter the step may be referred to as "aqueous solution preparation step"); reacting the cellulose fibers and a cyclic amide compound by adding, to the aqueous solution, the cyclic amide compound in an amount of 0.2 equivalents or more and 10 equivalents or less relative to the amount of anhydroglucose units contained in the cellulose fibers (hereinafter the step may be referred to as "cyclic amide compound reaction step"); and neutralizing the base by adding an acid to the aqueous solution (hereinafter the method may be referred to as "neutralization step").

In the method for producing hydrophobically modified cellulose fibers according to an embodiment of the present invention, the reaction proceeds as in the chemical reaction scheme described below. Cell in the following scheme represents a residue formed by removal of OH groups from cellulose fibers. Although only one OH group of cellulose fibers is represented in the chemical reaction scheme described below, the cellulose fibers have a large number of OH groups on the surfaces thereof, and in fact, similar reactions occur at the OH groups of the cellulose fibers.

The OH group represented in the chemical reaction scheme described below may be any of OH groups of a glucose unit in the molecular structure of the cellulose (fibers). That is, the glucose unit has three OH groups, but the OH group at any position may react with the cyclic amide compound as indicated below. In the reaction, only one OH group of the glucose unit may react with the cyclic amide compound, two OH groups may react with the cyclic amide compound, or all three OH groups may react with the cyclic amide compound. In the present application, it is assumed that, in particular, the OH group at the 6-position of the glucose unit is likely to react with the cyclic amide compound.

In the production method according to an embodiment of the present invention, firstly, in the aqueous solution preparation step, cellulose fibers are mixed with a base (NaOH in the chemical reaction scheme described below) and water are mixed, to prepare an aqueous solution containing the cellulose fibers and the base. Then, in the cyclic amide compound reaction step, a cyclic amide compound (N-methylpyrrolidone (may be referred to as "NMP") in the following scheme) is added to the aqueous solution, so that the cyclic amide compound is reversibly ring-opened by the base in the system. The cyclic amide compound reacts with the OH group (O⁻Na⁺ group) on the base-treated cellulose fiber surface to form an ester bond therebetween. Subsequently, in the neutralization step, an acid (organic acid (R-COOH, R- is any organic group) in the following chemical reaction scheme) is added to the aqueous solution, so that the base in the system is neutralized, and the amine derived from the cyclic amide compound reacts with the organic acid to form an amide bond.

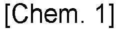

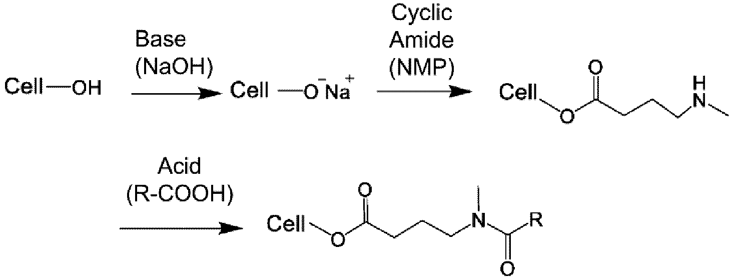

Through a series of the steps described above, a hydrophobic group is introduced to the surfaces of the cellulose fibers, and the cellulose fibers are hydrophobically modified. In the neutralization step, the acid is not necessarily required to be reacted with an amine derived from the cyclic amide compound, and, for example, the acid may be used only for neutralizing the base in the system. The respective steps of the production method will be described in detail below.

### (1) Aqueous Solution Preparation Step

In the aqueous solution preparation step, cellulose fibers, a base, and water are mixed to prepare an aqueous solution having a cellulose fiber concentration of 0.5 mass% or more and 50 mass% or less.

The water used in this step is preferably ion-exchanged water because the ion-exchanged water suppresses side reactions.

The cellulose fibers used in this step only need to be a cellulose-containing fibrous material, and may partially contain a component other than the cellulose, such as hemicellulose or lignin. In a case where the component other than cellulose, such hemicellulose, contains a hydroxy group, the hydroxy group may react with the cyclic amide compound. Thus, in a case where the cellulose fibers contain hemicellulose or the like, the amount of the cyclic amide compound is preferably adjusted (increased) in consideration of the amount of the hydroxy group contained in the component other than cellulose. From the viewpoint of performing the above-described hydrophobic modification efficiently, the proportion of cellulose in the cellulose fibers is preferably 30 mass% or more, and more preferably 60 mass% or more. The concentration of cellulose in the cellulose fibers can be determined by comprehensive evaluation of multiple analytical results. Specifically, because hemicellulose, lignin, or the like is amorphous, the amount of cellulose in the cellulose fibers can be determined by performing X-ray diffraction or sugar analysis by ion chromatography.

The degree of crystallinity of the cellulose fibers is preferably 50% or more, and more preferably 60% or more. In a case where the degree of crystallinity of the cellulose fibers is 50% or more, when the resulting hydrophobically modified cellulose fibers are used in any composite material, the mechanical strength of the composite material is likely to increase. The degree of crystallinity is represented by (crystalline region of cellulose)/{(crystalline region of cellulose) + (amorphous region of cellulose) + (region derived from non-cellulose (amorphous region))} × 100, and can be determined by X-ray diffraction as described above. The Segal method is known as a more specific calculation method.

The raw material of the cellulose fibers is not particularly limited, and examples of the raw material include pulp obtained from wood, bamboo, hemp, jute, kenaf, cotton, beet, agricultural waste, and fabric; and recycled materials such as rayon and cellophane. The pulp described above may be chemical pulp obtained by subjecting a plant raw material to chemical or mechanical treatment. Specifically, the pulp may be, for example, any of pulps such as sulfite pulp, semi-chemical pulp, chemiground pulp, chemi-mechanical pulp, groundwood pulp, refiner mechanical pulp, thermomechanical pulp, chemi-thermomechanical pulp, deinked wastepaper pulp, cardboard wastepaper pulp, and magazine wastepaper pulp. The cellulose fibers in the present specification include, besides completely fibrous cellulose fibers, for example, rounded particulate cellulose fibers, and cellulose fibers processed or formed into any shape.

The cellulose fibers that can be used in this step have an average fiber diameter of 0.02 µm or more, preferably 1 µm or more and 100 µm or less, and more preferably 5 µm or more and 60 µm or less. When the average fiber diameter of the cellulose fibers is 1 µm or more and 100 µm or less, the cellulose fibers are readily available at low cost, and have good handleability. The average fiber length is preferably 100 µm or more and 10000 µm or less, and more preferably 200 µm or more and 5000 µm or less. When the average fiber length of the cellulose fibers is in the range described above, the resulting hydrophobically modified cellulose fibers are readily used for various applications.

The average fiber diameter and fiber length described above are average values of measured fiber diameters and fiber lengths of 100 or more cellulose fibers when the fiber form is observed with, for example, an optical microscope, an electron microscope, or an AFM, which is used depending on the diameter to be measured.

The base only needs to be a compound that enables ring-opening of the cyclic amide compound and can promote the reaction between OH groups of the cellulose fibers and a ring-opened product of the cyclic amide compound in the cyclic amide compound reaction step described below. The base is preferably a compound that can adjust the pH of the aqueous solution to 11 or higher. When the pH of the aqueous solution is 11 or higher, the reaction described above is readily promoted. Examples of the base to be used in this step include an inorganic base such as an alkali metal hydroxide or an alkaline earth metal hydroxide; and an organic base such as an amine compound. Specific examples of the alkali metal hydroxide and the alkaline earth metal hydroxide, which are inorganic bases, include sodium hydroxide, potassium hydroxide, lithium hydroxide, calcium hydroxide, and barium hydroxide. Examples of the amine compound, which is an organic base, include tertiary amine compounds such as triethylamine, diazabicycloundecene, and diazabicyclononene. In this step, one type of these compounds may be used alone, or two or more types thereof may be used in combination. Among these, sodium hydroxide or trimethylamine is preferred from the viewpoints of low cost and fast processing of the cellulose fibers, or diazabicycloundecene or diazabicyclononene is more preferred from the viewpoint of allowing reaction to proceed mildly.

In the aqueous solution preparation step, the method for mixing the cellulose fibers, the base, and water is not particularly limited, but is preferably a mixing method that does not change the crystal structure of cellulose. When cellulose fibers come into contact with an aqueous solution having a high base concentration, the crystal structure of cellulose may be changed. Thus, in this step, preferably, a solution in which cellulose fibers are dispersed in water is prepared separately from a solution in which a base is dispersed in water, and these solutions are mixed together.

The cellulose fiber concentration of the aqueous solution prepared in this step may be 0.5 mass% or more and 50 mass% or less, and preferably 1 mass% or more and 30 mass% or less. When the cellulose fiber concentration of the aqueous solution is 0.5 mass% or more, the cellulose fibers can be efficiently hydrophobically modified. Meanwhile, when the cellulose fiber concentration is excessively high, the aqueous solution has increased viscosity and becomes difficult to handle. However, when the cellulose fiber concentration is 50 mass% or less, the viscosity of the aqueous solution can be adjusted to fall within a desired range.

In a case where the base to be used is an inorganic base such as an alkali metal hydroxide or an alkaline earth metal hydroxide, the inorganic base concentration of the aqueous solution prepared in this step is preferably 1 mass% or more and 10 mass% or less, and more preferably 3 mass% or more and 8 mass% or less. When the inorganic base concentration is 1 mass% or more, the cyclic amide compound readily reacts with the cellulose fibers in the cyclic amide compound reaction step described below. Meanwhile, when the inorganic base concentration is 10 mass% or less, the crystal structure of the cellulose is less likely to be affected. Meanwhile, in a case where the amine compound described above is used as the base, the amount of the base (amine compound) to be added is appropriately determined depending on the type thereof or the like, and may be such an amount that the pH of the aqueous solution can be adjusted to 11 or higher as described above.

In this step, after mixing of the cellulose fibers, the base, and the water, the resultant aqueous solution is preferably stirred sufficiently. The stirring time and the stirring method are appropriately determined depending on the amount or viscosity (cellulose fiber concentration) of the aqueous solution or the like. When heat is generated due to the mixing, the crystal structure of the cellulose tends to be changed, or the cellulose tends to be decomposed. Thus, at the time of mixing, stirring is preferably performed in multiple separate batches with intervals provided therebetween, or stirring is preferably performed in small amounts.

After mixing of the cellulose fibers, the base, and the water, the aqueous solution may be concentrated as necessary. The concentration method is not limited, and an example thereof is filtration. In this case, the degree of concentration is preferably adjusted so that the cellulose fiber concentration of the aqueous solution after the concentration is 0.5 mass% or more and 50 mass% or less, and preferably 1 mass% or more and 30 mass% or less.

### (2) Cyclic Amide Compound Reaction Step

The cyclic amide compound reaction step involves adding a predetermined amount of a cyclic amide compound to the aqueous solution described above, thereby reacting the cellulose fibers with the cyclic amide compound.

The cyclic amide compound only needs to be a compound that has a cyclic structure and includes an amide bond, i.e., -NHCO- structure in the ring moiety, and undergoes ring opening in the presence of the base to form an ester bond with an OH group on a cellulose fiber surface. Examples of the cyclic amide compound include N-methyl-2-pyrrolidone, N-cyclohexyl-2-pyrrolidone, N-methyl-ε-caprolactam, 2-pyrrolidone, ε-caprolactam, N-dimethylpropyleneurea, 1,3-dimethyl-2-imidazolidinone, and various lactams other than these. One type of these compounds may be used alone, or two or more types thereof may be used. Among these, N-methyl-2-pyrrolidone is preferred from the viewpoints of good reactivity, easy availability, and the like. N-methyl-2-pyrrolidone is suitable from the viewpoint of having a molecular size similar to that of 2,2,6,6-tetramethylpiperidin-1-oxy radical (TEMPO) that is known to not react with an OH group in the interior of the crystal structure of cellulose fibers (for maintaining the crystal structure), but acts on an OH group on the surface of cellulose fibers.

In this step, the amount of the cyclic amide compound added to the aqueous solution may be such an amount that the equivalent relative to the amount of anhydroglucose units of the cellulose fibers in the aqueous solution (hereinafter may be referred to as "AGU") is 0.2 or more and 10 or less. The AGU is preferably 0.7 or more and 10 or less, and more preferably 0.7 or more and 1.0 or less. When the AGU is 0.2 or more, the cellulose fibers can be adequately hydrophobically modified. When the AGU is 0.7 or more, the resultant hydrophobically modified cellulose fibers can be provided with higher compatibility to a resin or an organic solvent. Meanwhile, when the AGU is 10 or less, the amount of excess cyclic amide compound remaining in the system can be reduced. When the AGU is 1.0 or less, hydrophobically modified cellulose fibers can be produced efficiently with a small amount of the hydrophobic modifier. The amount of the anhydroglucose units contained in the cellulose fibers can be calculated based on the mass of the cellulose fibers in the aqueous solution. In a case where the cellulose fibers are wood powder, lignocellulose, or the like and contain lignin, the amount of the anhydroglucose units is calculated by excluding the lignin amount from the mass of the cellulose fibers.

In this step, after addition of the cyclic amide compound, the cyclic amide compound and the cellulose fibers are preferably adequately reacted by stirring the aqueous solution. In this case, the temperature of the aqueous solution is preferably 5°C or higher and 90°C or lower, and more preferably 10°C or higher and 60°C or lower. The stirring time and the stirring method are appropriately determined depending on the amount or viscosity of the aqueous solution or the like. In a case where the aqueous solution is stirred, the stirring is preferably performed in multiple separate batches while the stirring container is cooled using a refrigerant or the like or while intervals are provided, so as to suppress a change in the crystal structure of the cellulose or decomposition of the cellulose due to heat generated by the stirring or due to the base in the system.

### (3) Neutralization Step

In the neutralization step, an acid is added to the aqueous solution described above to neutralize the base described above with the acid. In this step, the acid may be reacted with an amino group derived from the cyclic amide compound in addition to the use of the acid for neutralization of the base.

The type of the acid to be used in this step is not particularly limited, and, for example, the acid may be an inorganic acid such as hydrochloric acid or may be an organic acid. The acid is more preferably an organic acid. When an organic acid is used, the organic acid reacts with an amino group derived from the cyclic amide compound to form an amide bond. As a result, an organic chain present on the cellulose fiber surface becomes even longer, and the resulting hydrophobically modified cellulose fibers exhibit further enhanced hydrophobicity.

Examples of the organic acid include acetic acid; fatty acids having from 3 to 16 carbons, such as propionic acid and butyric acid; dicarboxylic acids having from 2 to 15 carbons, such as oxalic acid; aromatic carboxylic acids such as benzoic acid, phthalic acid, and salicylic acid; and a carboxyalkylamino group-containing compound having an aromatic ring represented by the chemical formula described below (hereinafter the compound may be referred to as "CP-MABA"). Among these, acetic acid or CP-MABA is preferred from the viewpoint of easy availability or the like.

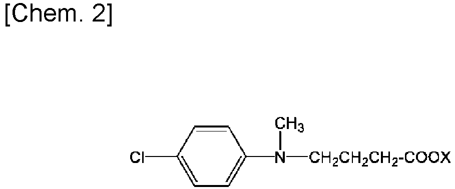

In the formula above, X represents an alkali metal atom or a hydrogen atom.

The amount of the acid to be used is appropriately determined depending on the amount of the base described above, and the acid is added until the aqueous solution becomes neutral.

After addition of the acid described above, a step of washing or drying the hydrophobically modified cellulose fibers may be performed as necessary.

### 2. Hydrophobically Modified Cellulose Fibers

The present invention also provides hydrophobically modified cellulose fibers that are produced by the method described above and have a structure in which the cyclic amide compound described above is ring-opening-polymerized with OH groups of the hydrophobically modified cellulose fibers, i.e., cellulose (fibers). In the hydrophobically modified cellulose fibers, a terminal amine formed by the ring-opening of the cyclic amide compound described above may remain as is, or the amine may be further bonded to a structure derived from the organic acid described above.

The hydrophobically modified cellulose fibers include, for example, the following structure.

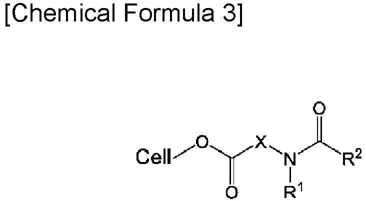

In the general formula above, Cell represents a residue formed by removal of OH groups from glucose units constituting cellulose. X represents a divalent residue formed by removal of a carboxy group and an amine from a ring-opened product of the cyclic amide compound described above, and is, for example, preferably an alkylene group having 2 or more and 6 or less carbons. R¹ represents hydrogen or an alkyl group having 1 or more and 6 or less carbons, and is preferably hydrogen or a methyl group. R² represents hydrogen or a monovalent group having 1 or more and 10 or less carbons. R² may include, in its structure, a carboxy group, a carbonyl group, an amino group, a halogen group, an aromatic group, an alkyl group, or the like. Specific examples of R² include groups derived from organic acids described above in the production method, and are preferably a methyl group and a chlorophenylmethylaminobutyl group.

The cellulose (fibers) include a large number of OH groups in the molecular structure thereof; however, all OH groups are not necessarily ring-opening-polymerized with the cyclic amide compound described above. The cellulose (fibers) only need to include a structure in which the cyclic amide compound described above is ring-opening-polymerized with at least some of the OH groups. This structure can be identified by analysis using NMR or the like. The amount of the ring-opening-polymerized structure of the cyclic amide compound contained in the hydrophobically modified cellulose fibers may be such an amount that the compatibility to a target resin or organic solvent is achieved, and the crystal structure of the cellulose is not affected. The amount can be appropriately determined depending on the type of such a resin or organic solvent.

The hydrophobically modified cellulose fibers according to an embodiment of the present invention have high compatibility to various resins and organic solvents because the hydrophobic group represented by the above formula is bonded to the cellulose fibers. Thus, the hydrophobically modified cellulose fibers can be easily mixed with a thermosetting resin, a thermoplastic resin, or an organic solvent to form a composite material. Such a composite material can be used in various applications, including electrical appliances, building materials, vehicles such as automobiles and trains, and aircrafts.

### EXAMPLES

The present invention will be further described below with reference to Examples and Comparative Examples. The technical scope of the present invention is not limited to these Examples.

### A. Evaluation of Dispersibility of Cellulose Fibers

### Example 1

### (1) Aqueous Solution Preparation Step (Preparation of Base-Containing Cellulose Fiber Aqueous Solution)

20 g (absolute dry mass) of cellulose fibers (KC FLOCK W-50GK, available from Nippon Paper Industries Co., Ltd.) having an absolute dryness of 95.1% was immersed in 86 g of ion-exchanged water. 32 g of sodium hydroxide and 262 g of ion-exchanged water were mixed, to prepare an aqueous base solution. These were then mixed together to prepare an aqueous solution having a cellular fiber concentration of 5 mass% and a base (NaOH) concentration of 8 mass%.

The prepared aqueous solution was divided into 100 g portions, and each aqueous solution was stirred three times by using AWATORI RENTARO (vacuum type, ARV-310P, available from Thinky Corporation) at 2000 rpm and 97.9 kPa (normal pressure) for 200 seconds (time interval after completion of one stirring was 600 seconds). The mixed aqueous solution after the stirring was suction-filtered, and the residue was used as a base-containing cellulose fiber aqueous solution. The base-containing cellulose fiber aqueous solution had a solid content (base-containing cellulose fibers) concentration of 18.5 mass% as calculated from the mass of the filtrate, and had a pH of 11 or higher as determined by dropping a portion of the aqueous solution onto a pH test paper.

### (2) Cyclic Amide Compound Reaction Step

0.29 g of N-methylpyrrolidone (NMP, cyclic amide compound) was added to 10.8 g of the base-containing cellulose fiber aqueous solution prepared in the step described above (amount of base-containing cellulose fibers: 2 g). The NMP amount corresponds to 0.24 of the equivalent relative to the amount of anhydroglucose units in the cellulose fibers (AGU). The liquid mixture was stirred six times by using AWATORI RENTARO (vacuum type, ARV-310P, available from Thinky Corporation) at 2000 rpm and 97.9 kPa (normal pressure) for 60 seconds (time interval after completion of one stirring was 600 seconds).

### (3) Neutralization Step

20 g of ion-exchanged water was added to the stirred aqueous solution, and 10 mass% aqueous acetic acid solution was added until the aqueous solution became neutral. 100 g of ion-exchanged water was added to the neutralized aqueous solution, and the mixture was subjected to suction filtration. Subsequently, suction was stopped, and 100 g of ion-exchanged water was added, followed by suction filtration again. The operation was repeated 9 times for sufficient washing, and dehydration was performed. The dehydrated mixture was heated at 105°C for 3 hours to produce hydrophobically modified cellulose fibers in an absolute dry state.

### Examples 2 to 5

Hydrophobically modified cellulose fibers were produced in the same manner as in Example 1 except that the amount of NMP added (AGU) in the above-described cyclic amide compound reaction step was changed to a value shown in table 1.

### Examples 6 to 10

Hydrophobically modified cellulose fibers were produced in the same manner as in Examples 1 to 5 except that the acid in the above-described neutralization step was changed to 10 mass% hydrochloric acid.

### Example 11

Hydrophobically modified cellulose fibers were produced in the same manner as in Example 4 except that the acid in the above-described neutralization step was changed to the CP-MABA solution described above (chlorophenylmethylaminobutanoic acid (CPMABA) as the organic acid). CP-MABA was prepared as described below.

### • Preparation of CP-MABA Solution

A distillation residue of a washing waste liquid of a polyphenylene sulfide (PPS) polymerization reaction product was treated with hydrochloric acid to achieve a pH of approximately 1 for acid precipitation of an oligomer, and solid-liquid separation was performed. Thereafter, caustic soda was added to the filtrate until the pH became approximately 4, to prepare a CP-MABA solution having a CP-MABA content of 80.7% (brown oily product). The prepared CP-MABA solution was used as the organic acid. The purity was analyzed by high performance liquid chromatography (HPLC).

### Comparative Examples 1 and 4

Modified cellulose fibers were produced in the same manner as in Example 1 or 6 except that the cyclic amide compound reaction step was not performed.

### Comparative Examples 2 and 5

Hydrophobically modified cellulose fibers were produced in the same manner as in Example 1 or 6 except that the amount of the NMP added (AGU) in the cyclic amide compound reaction step was changed to a value shown in table 1.

### Comparative Examples 3 and 6

Hydrophobically modified cellulose fibers were produced in the same manner as in Example 1 or 6 except that methanol (MeOH) was used in place of NMP in the cyclic amide compound reaction step.

### Comparative Example 7

24 g of 1,8-diazabicyclo[5.4.0]-7-undecene (also referred to as "DBU") was added to 6 g (absolute dry mass) of cellulose fibers (KC FLOCK W-50GK, available from Nippon Paper Industries Co., Ltd.) and 0.3 g of water absorbed therein, to prepare a liquid mixture. The cellulose fiber concentration of the liquid mixture was 20 mass%, and the base concentration was 77 mass%. The liquid mixture was stirred 10 times by using AWATORI RENTARO (vacuum type, ARV-310P, available from Thinky Corporation) at 2000 rpm and 97.9 kPa (normal pressure) for 60 seconds (time interval after completion of one stirring was 600 seconds). The stirred liquid mixture was neutralized in the same manner as in Example 4, to produce hydrophobically modified cellulose fibers.

### Examples 12 and 13

24 g of 1,8-diazabicyclo[5.4.0]-7-undecene (DBU) was added to 6 g (absolute dry mass) of cellulose fibers (KC FLOCK W-50GK, available from Nippon Paper Industries Co., Ltd.) and 0.3 g of water absorbed therein, to prepare a liquid mixture. The cellulose fiber concentration of the liquid mixture was 20 mass%, and the base concentration was 77 mass%. The liquid mixture was stirred 10 times by using AWATORI RENTARO (vacuum type, ARV-310P, available from Thinky Corporation).at 2000 rpm and 97.9 kPa (normal pressure) for 60 seconds (time interval after completion of one stirring was 600 seconds). Thereafter, the cyclic amide compound reaction step and the neutralization step were performed in the same manner as in Example 4 or 9, to produce hydrophobically modified cellulose fibers.

### Evaluation

### • Evaluation of Dispersibility in Epoxy Resin

After the above-described aqueous solution preparation step, cyclic amide compound reaction step, and neutralization step, and the like were performed, suction filtration was performed, and 0.3 g of hydrophobically modified cellulose fibers (or modified cellulose fibers) in an absolute dry state obtained through heating at 105°C was mixed with 5.7 g of bis-F epoxy resin (835LV, available from DIC Corporation), to adjust the cellulose fiber concentration of the mixture to 5 mass%. Stirring/grinding was performed with a medicine spoon for 5 minutes, and then stirring was performed by using AWATORI RENTARO (vacuum type, ARV-310P, available from Thinky Corporation) at 2000 rpm and 0.8 kPa for 300 seconds. Evaluation was performed as follows based on the size of the solid content remained in the resultant composition. △ to ⊚ are practically acceptable ranges.
×: Case where a large amount of solid content remained
△: Case where a small amount of solid content remained
O: Case where a slight amount of solid content remained, but the solid content was dispersed when crushed with a medicine spoon
⊚: Case where no solid content was visually recognized

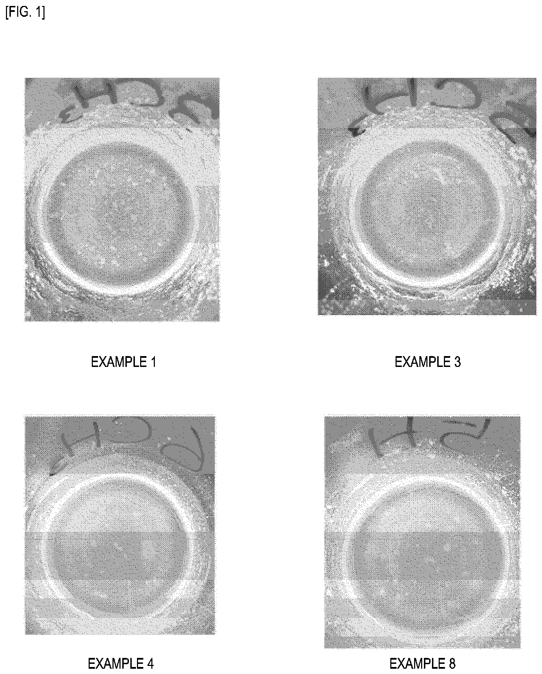

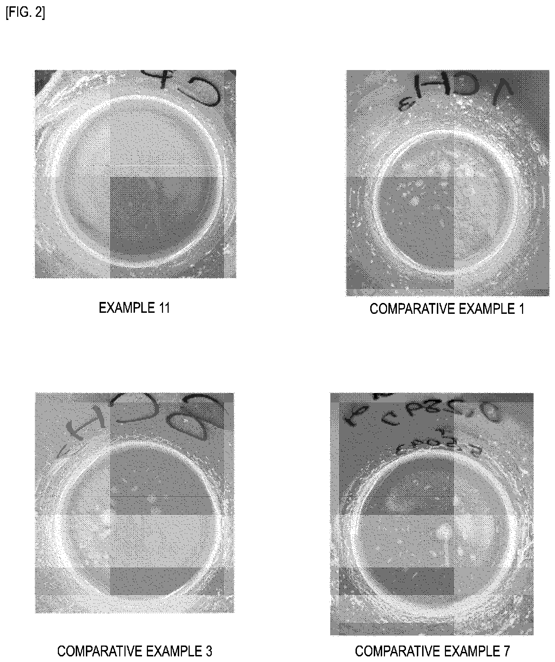

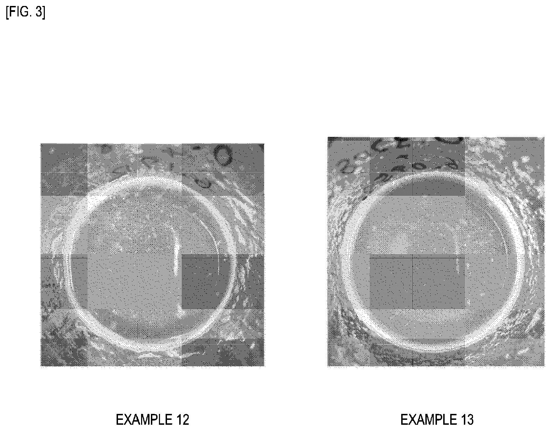

In addition, FIG. 1 to FIG. 3 illustrate photographs of compositions (after stirring) in which the hydrophobically modified cellulose fibers (or modified cellulose fibers) produced in Examples 1, 3, 4, 8, 11 to 13, and Comparative Examples 1, 3, and 7 were mixed with the epoxy resin.

**[Table 1]**

| | | Comparative Example | | Example | | | | | Comparative Example | | | Example | | | | | Comparative Example |
|---|---|---|---|---|---|---|---|---|---|---|---|---|---|---|---|---|---|
| | | 1 | 2 | 1 | 2 | 3 | 4 | 5 | 3 | 4 | 5 | 6 | 7 | 8 | 9 | 10 | 6 |
| Cellulose fibers | Concentration [wt%] | 5 | 5 | 5 | 5 | 5 | 5 | 5 | 5 | 5 | 5 | 5 | 5 | 5 | 5 | 5 | 5 |
| Base | Type | NaOH | | | | | | | | | | | | | | | |
| | Concentration [wt%] | 8 | 8 | 8 | 8 | 8 | 8 | 8 | 8 | 8 | 8 | 8 | 8 | 8 | 8 | 8 | 8 |
| Base-containing cellulose fibers | Solid content concentration [wt%] | 18.5 | 18.5 | 18.5 | 18.5 | 18.5 | 18.5 | 18.5 | 18.5 | 18.5 | 18.5 | 18.5 | 18.5 | 18.5 | 18.5 | 18.5 | 18.5 |
| Hydrophobic modifier | Type | - | NMP | | | | | | MeOH | - | NMP | | | | | | MeOH |
| | Amount [g] | - | 0.15 | 0.29 | 0.59 | 0.88 | 1.17 | 10 | 0.88 | - | 0.15 | 0.29 | 0.59 | 0.88 | 1.17 | 10 | 0.88 |
| | Amount (AGU) | - | 0.12 | 0.24 | 0.48 | 0.72 | 0.96 | 8.17 | 2.22 | - | 0.12 | 0.24 | 0.48 | 0.72 | 0.96 | 8.17 | 2.22 |
| Acid | Type | 10 wt% Acetic acid | | | | | | | | 10 wt% Hydrochloric acid | | | | | | | |
| Dispersibility | | × | × | △ | △ | ○ | ⊚ | ⊚ | × | × | × | △ | △ | ○ | ○ | ○ | × |

**[Table 2]**

| | | Example | Comparative Example | Example | Example |
|---|---|---|---|---|---|
| | | 11 | 7 | 12 | 13 |
| Cellulose fibers | Concentration [wt%] | 5 | 20 | 20 | 20 |
| Base | Type | NaOH | DBU | | |
| | Concentration [wt%] | 8 | 77 | 77 | 77 |
| Base-containing cellulose fibers | Solid content concentration [wt%] | 18.5 | 20 | 20 | 20 |
| Hydrophobic modifier | Type | NMP | - | NMP | NMP |
| | Amount [g] | 1.17 | - | 1.17 | 1.17 |
| | Amount (AGU) | 0.96 | | 0.96 | 0.96 |
| Acid | Type | CP-MABA | 10 wt% Acetic acid | 10 wt% Hydrochloric acid | 10 wt% Acetic acid |
| Dispersibility | | ⊚ | × | △ | △ |

As shown in Table 1 and Table 2 described above and FIG. 1 to FIG. 3, hydrophobically modified cellulose fibers having good dispersibility in an epoxy resin were produced by mixing cellulose fibers with a base, and then reacting the mixture with a cyclic amide compound (Examples 1 to 13). In this case, even when the cyclic amide compound was used in a relatively small amount (e.g., AGU of 1 or less), the dispersibility was comparable to that when the cyclic amide compound was used in a large amount (AGU of 8.17) (comparison between Examples 4 and 5 and comparison between Examples 8, 9, and 10).

Even in the case of using the cyclic amide compound, when the amount thereof was too small, the dispersibility failed to be enhanced (Comparative Examples 2 and 5). It is assumed that hydrophobic modification of the cellulose fibers was not enough. Also in the case where methanol was used in place of the cyclic amide compound, the dispersibility was not enhanced (Comparative Examples 3 and 6). It is assumed that the reactivity of the hydrophobic modifier was not enough, and hydrophobic modification was not achieved. In the case where the cellulose fibers were only treated with the base, the dispersibility was not improved at all (Comparative Examples 1 and 4). Furthermore, in the case where the DBU was used as a base at a high concentration (Examples 12 and 13), the dispersibility was partially enhanced. Meanwhile, when these Examples 12 and 13 were compared with Examples 4 and 9, the dispersibility was slightly lower. Conceivably, this is because the DBU has a relatively bulky structure as compared with NaOH, and thus H+ is difficult to extract from OH groups on the cellulose fiber surface. It is presumed that the efficiency of action was poor in the same treatment time.

### B. Evaluation of Hydrophobicity

### Preparation of Epoxy Resin Composition

Hydrophobically modified cellulose fibers were prepared in the same manner as in Examples 4, 9, and 11 described above, and the hydrophobically modified cellulose fibers of each type were mixed with an epoxy resin in the same manner as in the evaluation of the dispersibility in the epoxy resin described above, to prepare an epoxy resin composition.

For Referential Example, untreated cellulose fibers (KC FLOCK W-50GK, available from Nippon Paper Industries Co., Ltd.) were added to a bis-F epoxy resin (835LV, available from DIC Corporation) so that the cellulose fiber concentration became 5 mass%, and the mixture was kneaded by using AWATORI RENTARO (vacuum type, ARV-310P, available from Thinky Corporation) at 2000 rpm and 0.8 kPa for 300 seconds, to prepare an epoxy composition.

### Analysis of Hydrophobicity

Each of the four epoxy resin compositions described above was allowed to stand at room temperature for 12 hours. The viscosity of the composition after being allowed to stand was measured by using a cone and plate viscometer (TVE-35H, cone rotor: 3° × R9.7, available from Toki Sangyo Co., Ltd.). In this case, the value measured at 25°C after rotation at 50 rpm for 30 seconds was determined. A smaller value indicates less friction between the epoxy resin and the cellulose fibers and higher hydrophobicity of the cellulose fibers. The results are shown in Table 3 below.

**[Table 3]**

| Type of cellulose fibers | Unmodified (Referential Example) | Example 4 (Neutralized with acetic acid) | Example 9 (Neutralized with hydrochloric acid) | Example 11 (Neutralized with CP-MABA solution) |
|---|---|---|---|---|
| Viscosity at 50 rpm [Pa·s] | 7.96 | 6.22 | 6.48 | 5.05 |

As shown in Table 3 above, the epoxy resin composition containing the hydrophobically modified cellulose fibers of each of Example 4, Example 9, and Example 11 had a lower viscosity than the epoxy resin composition containing the unmodified cellulose fibers. The results indicate that the compatibility between the epoxy resin and the cellulose fibers was enhanced due to the hydrophobic modification. As compared with the case of using the hydrophobically modified cellulose fibers of Example 9 (neutralization with hydrochloric acid), in the case of using the hydrophobically modified cellulose fibers of Example 4 (neutralization with acetic acid) or Example 11 (neutralization with the CP-MABA solution), an additionally measured thixotropic index (TI value) was lower, and friction between the cellulose fibers was more suppressed. That is, the reaction between the amino group derived from the cyclic amide compound and acetic acid or CP-MABA reduced the hydrogen bonding derived from the hydroxy group in the untreated case or the amino group in the case of treatment with hydrochloric acid, resulting in high hydrophobicity. In Example 11 in which the neutralization was performed with the CP-MABA solution, the **TI** value and the viscosity were lower than those in Example 4 in which the neutralization was performed with acetic acid. Thus, hydrophobization was further achieved by the reaction with CP-MABA having an aromatic ring.

The present application claims priority to Japanese patent application No. 2022-138431 filed on August 31, 2022. The contents described in the application specification and the drawings are all incorporated herein by reference.

### INDUSTRIAL APPLICABILITY

According to the method for producing hydrophobically modified cellulose fibers of the present invention, hydrophobically modified cellulose fibers can be produced efficiently with a small amount of a hydrophobic modifier. The hydrophobically modified cellulose fibers produced by the production method have high compatibility to a resin or an organic solvent and can be used in various composite materials.

## Claims

1. A method for producing hydrophobically modified cellulose fibers, the method comprising:
preparing an aqueous solution having a cellulose fiber concentration of 0.5 mass% or more and 50 mass% or less by mixing cellulose fibers, a base, and water;
reacting the cellulose fibers and a cyclic amide compound by adding, to the aqueous solution, the cyclic amide compound in an amount of 0.2 equivalents or more and 10 equivalents or less relative to an amount of anhydroglucose units contained in the cellulose fibers; and
neutralizing the base by further adding an acid to the aqueous solution.

2. The method for producing hydrophobically modified cellulose fibers according to claim 1, wherein
the base is an inorganic base; and
in the preparing the aqueous solution, the cellulose fiber concentration is adjusted to 1 mass% or more and 30 mass% or less, and a concentration of the inorganic base is adjusted to 1 mass% or more and 10 mass% or less.

3. The method for producing hydrophobically modified cellulose fibers according to claim 1, wherein
the cyclic amide compound is N-methylpyrrolidone.

4. The method for producing hydrophobically modified cellulose fibers according to claim 2, wherein
an amount of the cyclic amide compound added is 0.7 equivalents or more and 1.0 equivalent or less relative to the amount of the anhydroglucose units.

5. The method for producing hydrophobically modified cellulose fibers according to claim 1, wherein
the base is an amine compound.

6. The method for producing hydrophobically modified cellulose fibers according to claim 1, wherein
the acid is an organic acid.

7. Hydrophobically modified cellulose fibers comprising a structure in which a cyclic amide compound is ring-opening-polymerized with an OH group of cellulose constituting the cellulose fibers.

8. The hydrophobically modified cellulose fibers according to claim 7, wherein
the hydrophobically modified cellulose fibers include a structure represented by a chemical formula described below: 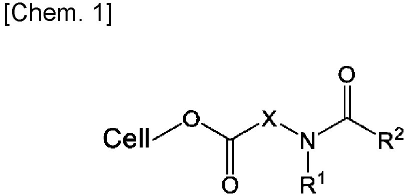 (in the chemical formula,
Cell represents a residue formed by removal of OH groups from glucose units constituting cellulose;
X represents a divalent residue formed by removal of a carboxy group and an amine from a ring-opened product of the cyclic amide compound;
R¹ represents hydrogen or an alkyl group having 1 or more and 6 or less carbons; and
R¹ represents hydrogen or a monovalent group having 1 or more and 10 or less carbons).
